# EUROPEAN PATENT SPECIFICATION

(11) **EP 0 978 022 B1**
(45) Date of publication and mention of the grant of the patent: **27.02.2002**
(21) Application number: 97928207.6
(22) Date of filing: 14.06.1997
(51) Int. Cl.: G06F 1/00, H04L 29/06

(54) **APPARATUS AND METHOD FOR THE PROTECTED TRANSMISSION AND REPRESENTATION OF ELECTRONICALLY PUBLISHED DOCUMENTS**
VORRICHTUNG UND VERFAHREN ZUR GESCHÜTZTEN ÜBERTRAGUNG UND DARSTELLUNG VON ELEKTRONISCH PUBLIZIERTEN DOKUMENTEN
APPAREIL ET PROCEDE DE TRANSMISSION PROTEGEE ET DE REPRESENTATION DE DOCUMENTS PUBLIES ELECTRONIQUEMENT

(30) Priority: 14.06.1996 DE 19623868; 28.08.1996 DE 19634712
(43) Date of publication of application: 09.02.2000
(73) Proprietor: Wittkötter, Erland, 8272 Ermatingen (CH)
(72) Inventor: Wittkötter, Erland, 8272 Ermatingen (CH)
(74) Representative: Behrmann, Niels, Dipl.-Ing.
(86) International application number: EP9703113
(87) International publication number: WO9748034

(56) References cited:
- EP-A- 0 265 183
- EP-A- 0 601 500
- EP-A- 0 651 554
- WO-A-95/08231
- US-A- 5 103 476
- US-A- 5 319 705
- US-A- 5 416 840

## Description

The present invention concerns an apparatus for protecting electronically published documents as set forth in the classifying portion of claim 1 and a method as set forth in the classifying portion of claim 9.

For defining the terms used in the present application, the following shall apply:

Data are representations of information of any sort. The classification of data occurs in data types. Information can only be useful on a computer when it has been assigned to a data type in accordance with fundamental conventions and physically stored. Information can be transformed into an equivalent data type or a physically stored form without a loss of content.

A text is constituted of the smallest units of texts, characters or symbols, such as, e.g., a number or a Chinese character. Each of these characters possesses a digital representation, in accordance with a pre-given convention or an agreed-on standard. A character is represented by a sequence of e.g. 7-, 8- or 16-bit chains of zeros and ones. There must be a set of characters, thus a precise association of text characters with their binary representation, and a font, by means of which the individual elements of this character set forms a surface of pixels. The bit sequence can be understood as an electronic text before or after the replacement by the character set. Agreement with the original text is also given when a computer program first transforms passive data into an output, so that it can be represented on an output apparatus. In addition, a text can also be represented on the output unit by active data that contains executable commands, operating instructions or instructional data. These active data can contain direct or indirect processor instructions.

The text is represented in and on the output unit, in and on a surface. The text consists of a content, thus a textually fixed verbal utterance, and a layout. In this layout there is a representation of font and type size, the positioning of individual words, characters, symbols or pictures, the type of chapter or page numbering, the kind of line or a length thereof, the line separation, page size, margin width, color or all other attributes which an observer can optically distinguish in represented characters.

The text can also contain dialogue boxes or input fields which request the user to enter data.

A picture means a representation of something or someone on a surface. Electronic or digitalized pictures are thereby stored in a data format in which they can be transformed as active or passive data by a computer program into a static, flat representation on an output unit. Defined in this way, texts can also be stored as pictures. Conversely, pictures can also be viewed as texts. A picture can be a representation of a real object. But it can also be a drawing generated by a person or computer of a real or non-real object. A picture can be based on pixels, bitmaps vectors or fractals. Some data formats employ compression methods. New methods of coding make use of decomposition in wavelets or fractals.

Pictures whose content changes across time are called videos or films. Videos are stored on the computer in data formats which make it possible for their active or passive data to be issued with the help of a computer program on an electronic output unit. Their issued contents are again represented in a sequential progression of single pictures.

A temporally changing drawing or a process which gives the illusion of movement or of life in a drawing, model or (non-dynamic) object is called animation. With animation there is a change of position by the objects to be viewed or a change in the position of the viewer. The objects viewed in an animation are not real in the represented manner, but only generated by people and their tools.

Interactive films are video media or animations whose represented action, observation point and angle of view or represented object can be changed by user inputs and external commands. A request for input at a meaningful point in time is in this sense likewise an output in the frame of an interactive medium.

A database is a structured collection of data which are stored on digital data carriers or electronic data processing units for the purpose of later digital or electronic reading.

Texts, pictures or films are visually comprehended. They are thereby part of human visual (optical) comprehension.

Audiomedia include all media which effect an acoustically audible output. Audiovisual media are in this connection all media that permit simultaneous audible or visible outputs.

Texts, videos or animations are in this sense audiovisual. A document in which more than one data convention is used or more than one visual or auditory representational medium is used are called multimedia.

Passive computer programs are programs whose code instructions are not directly processed by the interfaces of the hardware inside a computer. In contrast to active computer programs, which contain a direct machine code for a processor, passive programs have effects only up to the lowest system interfaces of an operating system and have the attribute that the code instructions are expressed in a language which can in principle be changed at any time, especially without changing the hardware.

Fonts are passive or active data or passive or active computer programs which are responsible for the visual representation of characters and symbols. They contain all the data and operating instructions for their size, appearance or other attributes. Fonts are used for the preparation or creation in an output represented by pixels on the output unit.

Control statements or control programs for machines or robots are also active or passive computer programs which deliver an output in the form of a sequential string of active mechanical, electrical, acoustic, visual, or chemical operational steps or passive sensorial input steps. An output can also have the form of a query or input which interact with the end user at a logical point in time.

In this sense, texts, pictures, databases, audio media, videos, animations, interactive films, control programs, fonts or passive or active computer programs, and video games, are all examples of electronic documents which have been stored in a digital or discrete electronic representation, and which can be published electronically.

A digital representation has the attribute that the individual bit data can be presented serially, thus in a spatially, temporally or logically sequentially connected manner. These data can be received or transferred in a temporally sequential manner, that is one after the other, without the inner connection being lost which is given only by the sequence of bits.

This bit information is then organized into larger contexts, coherences, connections or summaries as characters, fonts, sentences, pages, texts, pictures, sounds, audiomedia, videos, animations, databases, control programs, active or passive programs, and so forth, and thus form data units. The summarized data or data units need not necessarily be physically connected in the storage medium. It suffices if the connection is realized through a separate addressing. It is then obvious through a knowledge of the data format employed which element is respectively the preceding or the following. Corresponding to the data format, the boundaries are set by the elements which have either no predecessor or no successor.

Data units can form a hierarchy in regard to the relations "is contained in" and "is a including set of". The hierarchies thus consist of a structure of data units, subsystems and substeps in the form of a graduation in regard to responsibility, function, functionality or sequence of the individual substeps which is in addition given by an order of precedence or rule of priority.

For example, in this sense the following hierarchical order is naturally and functionally pregiven: character, word, sentence, paragraph, page, chapter, text. Elements on the same hierarchical level and of the same hierarchical sort thereby form a hierarchical class. A data unit is thereby an element of a hierarchical class.

Within these larger summaries the individual data units of a hierarchical class can be linearly arranged. The data units can, however, also be hierarchically arranged and thus form more comprehensive hierarchical classes. References to other data units can be contained within data units. These references can be understood as jump instructions and can be followed as a command to jump to the predecessor or successor in the hierarchical class. By means of these jump instructions non-linear electronic documents can be created, e.g., ones which can then be visualized in the form of a network or can also be designated as a hypertext.

A structure refers to the arrangement or relationships of the parts of a whole to one another or their inner arrangement, together with the inherent relational network or its attributes. Further, a structure for a relational network can be made up of rules in which the elements fit together in a complex totality. The sum of all connections of the data units to each other or within the hierarchy.

The structural elements are then the jump instructions which represent the existing arrangement instructions in the form of bit information, or implicitly they form a connected arrangement through the linear sequence, without further bit information, whereby the individual data elements are linearly connected and could generate the complete, unaltered electronic document. The structural elements can, however, also be addressing through name equivalency of objects or references within a group of elements. The structural elements which are used in the invention in a preferred manner are those which are taken from an abstract view, i.e., from the syntax, the management of the structuring or the visible addressing of the elements, that exist within a group of elements.

Linearity is a sequence of data units whose arrangement is one-dimensionally linear, whereby the individual units can respectively have only one neighbor in front and behind, respectively left and right.

A linear chain can, however, also be singly linked, so that it is only possible to infer to the preceding or to the following element.

A structure is non-linear if it possesses in a hierarchy class less than two or more than two neighboring elements bound through explicitly or implicitly assumed jump instructions without the beginning or end point of an electronic document playing a role in this consideration. In addition, a structure is non-linear if the linear arrangement pre-given by the unaltered electronic document has been changed. This change can be made on a hierarchical level through exchange or replacement of data units by references. These references could form a singly linked connection to one or more identical or almost identical data units at different position.

The connection between two data units forms the linear structural element. The expansion of this connection to several data units forms a sequential, serial or linear sequence. In this case the overall document is definitely created from its individual components, and it can in any case be authentically identified with the original unaltered document.

Without this linear structural element - forming the sequence - the thus separated data units could be regarded as equally entitled to be arranged consecutively and in addition arbitrarily arranged. The arbitrary and possibly pseudo-randomly determined deletion or changing of structural elements can also be referred to as a mixing or scrambling process or a de-addressing process, i.e., the intended undoing of the addressing. The deletion of a structure element has to imply that the original order, addressing or naming is changed, but these structure elements, with their position or their assignments, are extracted or stored to an external device, file or database. The original state can be reconstructed, i.e., the document can be returned to the original state or transformed into an intended new state, if these additional information are provided as operating instructions.

The structural elements, especially the linear ones, in part represent not explicitly articulated information without which meaningful use is impossible. Information which leads to the reconstruction of usability, i.e., which recreates the structural elements, permits the electronic or human readability or usability of a so-prepared electronic document.

Local alternation within a statement is possibly not recognizable after the deletion or changing of a structural element, but it provides, in connection with the new context, a meaningless, unusable, contradictory, unreliable or false meaning context.

In contrast to a restoration in which the original state is not recreated, and therefore the original state is no longer recognizable but rather in the given case can only be inferred through additional information, a reconstruction is indistinguishable from the original state of the document. A restoration of a document can, however, be made in a logical manner so that later the arranged data can be provided with the context of creation, temporally, spatially, logically or with reference to persons and thereby make possible inferences to the original state.

We can regard as structural elements of texts, besides the implicit linearity of words, sentences and pages, also the explicitly present chapter numbering, page numbering, inner page references, references from the table of contents to the text, page references from the indices, references from the text to the bibliography, and so forth. Labels, references or hyperlinks in non-linear hypertexts can also be regarded as structural elements. Essential conjunction like "and", "or" or short phrases that already inform the reader about most of the text like a headline could be removed separately by providing these words or phrases from external source inside the operational instruction as significance creating or causing structural elements.

Structural elements in databases are given by database indices or the addressing with the primary key or foreign key or by other organizational data for structuring and managing a database. With a hard disk, diskette or CD-ROM, e.g., the structure element are included in the FAT or in the Inode table.

With passive and active programs the structural elements are the linkages which arise in the variables and function through name equivalency, if they refer to the same source or the same object. The agreement of names in an electronic document thereby also represents a not further-analyzed structural element. The alteration of a program can also be performed within the obligatory grammatical rules of a programming or machine language using instructional rules so that checking the syntax with a compiler does not reveal errors, and that error reports during the execution time of the program could not be used to locate the position of the change of the structural elements.

Metadata on electronic documents that help programs on a computer to understand, to extract and to use the semantic or the syntax of statements, pictures or programs could contain several structure elements for organization and management by itself. But Metadata offer structure elements also, that are providing and showing relations in between particular shares of the electronic document that belongs to these data.

With numbers the structural elements are the prefix, postfix operators, the right assignment to the correct order of magnitude or the right unit of measurement. Their alteration cannot be locally determined.

The deletion or changing of a structural element has the consequence that all the data units connected with it lead to meaningless, contradictory, useless or false statements or sequence processes.

The increasing spread of electronic data networks and independent data carriers (for example CD-ROMs), the steadily enlarging user circle, and the improvement in transmission and access technology for on-line services are also yielding new possible ways of offering and publishing electronic documents (or media) by way of such data networks, for example the Internet; such products, besides texts and images, also include audio or video media etc.. In addition, such electronic marketing channels, e.g., the Internet, open up interesting business opportunities with enormous advantages in the logistics of marketing and clear cost advantages in the publication process.

With the creation of the technological framework conditions for electronic publication of that kind, there arises the technical requirement of protecting such media from unauthorised access or from illegal copying so that the copyright of the supplier or provider can be effectively protected: due to the digital character of the electronically published information copying (even unauthorised) could occur without a loss of quality; therefore the question of protecting such electronic publications is an existential and fundamental key question for the public release of (digital) video, audio and print media etc. in electronic form.

EP 0 665 486 A2 discloses a method with which electronically published media can be protected in order to achieve the aim outlined above.

That method from the state of the art involves a substantially cryptographic method in which an (electronic) document is transmitted by way of a network, which document is then to be decoded on the local computer. In that respect the local user decoding option is based on authentication, which occurs by way of the network, of the user and a corresponding individual coding. In addition the document is electronically so clearly identified that identification of an illegal copy can be traced back to the original user - therefore at least legal assertion of the claims involved, after illegal access or an unauthorised copy has occurred, is possible.

However that method in accordance with the state of the art suffers from a number of disadvantages: thus the transmission and computing expenditure alone is already considerable for the reason that a specific version of the complete document must be transmitted by way of the network for each identified and authenticated user; therefore, besides the encoding expenditure for the entire document, the procedure involves transportation of a volume of data which is not inconsiderable, precisely in the case of multi-media documents. It is admittedly to be assumed that in future, by virtue of powerful computing installations, this method will also operate for a large number of (possibly simultaneously) accessing users, with an acceptable access time; however there is then still the problem that the network capacities are possibly not always sufficient for transmission of the amount of data involved in the complete document, precisely in terms of real-time operation.

US 5, 103,476 discloses an apparatus according to the preamble of claim 1. This document also describes a method of distributing software in a secure manner by first distributing inactive or unusable portions of the programs and, additionally, transmitting so-called overlay files to be run together with the inactive software such that a final main program to be run on a local computer system can be achieved. The overlay may be communicated by means of a data transmission network upon completion of a registration and licensing procedure.

EP A1 0 601 500 A1 as well as WO95/08231 additionally disclose apparatus for protecting electronically published documents disclosing several of the features of the preamble of claim 1. All of these documents include security systems or security mechanisms to control access to electronically published documents, clearly based on completed billing or licensing transactions.

However, neither of these documents known from the prior art permits further security or authentication during later sessions of retrieving and representing the respective electronically published document, once the initial licensing transaction has been completed. Therefore, particularly with regard to electronic documents that require tight access control, or that consist of specific document structures, such prior art technology appears deficient.

Therefore, the object of the present invention is to provide an apparatus according to the preamble of claim 1 that improves the control and flexibility of the document distribution process.

The invention further seeks to provide that the documents to be published in accordance with the invention are potentially made available to an unlimited number of users (without respective individual complete encodings having to be effected for a respective user - which is expensive in terms of time and computing capacity - as in the above-mentioned state of the art).

That object is attained by the apparatus set forth in claim 1 and the method set forth in claim 8.

Advantageously in that respect the local storage of the electronically published document, although in a manner which is unusable for the user without the additional external data permits the non-encoded identical distribution of a theoretically unlimited number of identical documents without intervention in the rights of the supplier or provider being possible by a copying action or the like. On the other hand, however, an interchange of the additional data takes place by way of the data transmission medium or the data network, with which data then the locally stored document data can be put into a usable and meaningful form for the user by the linking means.

In this respect, in accordance with the invention, the expression "data transmission medium" means any electronic device for transmitting data, and "data transmission network" means any electronic network with which data can be exchanged or transmitted between computers, beyond the local area. Transfer media could be wired or non-wired phone lines, any cable capable for information transfer, any kind of broadcast like terrestrial or by satellite, or any kind of memory with input, output interfaces and which is able to perform data processing operation.

As in particular it is also possible that transmission of the data for decoding the documents is effected by way of a terrestrial television transmitter or by way of satellite, in which case for example the inquiries also take place by way of a data line, the expression "data transmission network" is also to be interpreted as any electronic transmission medium with which - beyond the local area - the data can be exchanged between computers or data can be requested by way of a transmission medium and received separately from said medium.

For that reason it is possible in accordance with the invention for the local data storage means to be interpreted as a television transmitter or other wide-band transmission medium, by way of which the same (volume) data are always periodically transmitted while a second slower channel individually supplies the additional data (a possibility for example is also an arrangement similarly to the principle of the Near-Video-On-Demand, as is broadcast for example by way of satellite). Accordingly the local data storage means according to the invention may therefore also have a means which is designed for the reception of periodically transmitted data by way of a wide-band channel.

In general, units which can be in the direct physical access of the user are meant as "local".

Generally, also a procedure or the content of a message may be called secure if the technology or personnel needed to illegally obtain the message effectively cost more time, money or energy than the maximal profit that anyone expects to gain by cracking the security system.

Security could be guaranteed by encryption or by hiding or disguising the data within a large quantity of other data or by assigning data a secret meaning or a secret allocation to certain functions agreed on in a secret communication before or after the mutated operational instructions are given to the final user.

Advantageous developments of the invention are set forth in the appendant claims.

Thus in a particularly preferred form the electronically published documents are stored in the local data storage means in a non-linear form, wherein in connection with the present invention the term "linear" is to be interpreted as follows (in addition to the definition given in the introduction of the present application): linear media, that is to say media which can be interpreted as a linear chain of pages, images or other information carriers, comprise a number of contents or content carriers (in the case of printed works therefore for example pages) which are connected together by way of a structure (therefore page numbers or the physical arrangement in a printed book) and which are put into a meaningful sequence. Therefore, by means of the structure elements, even a document comprising a plurality of non-linear content carriers which are stored in any sequence and which therefore cannot be used as an overall document for a user can be put into the form of a linear, usable structure.

In that respect, therefore, the additional data provide a directed or bi-directional connection (link) between two separate parts of one or more documents. Linearity of a document therefore denotes the simply scaled sequence or arrangement of the individual information carriers while non-linearity in the present sense is the deviation from a linear arrangement (at least of parts) of the medium.

A particularly suitable form of local data storage means that can be used is a permanent storage means, for example in the form of an optically readable CD, which can be produced at low cost in large numbers. Then, the individual information carriers of the document could be stored on that CD - in non-linear configuration - in an arrangement which differs from the natural document sequence, without the CD additionally containing data or items of information about the arrangement of the information carriers, into the usable sequence. On the contrary those additional items of information which firstly bring about linearity of the document would be supplied externally by way of the network.

Alternatively, in accordance with the present invention it is possible to achieve non-linearity in the local data storage means in such a way that the document stored therein has a number of data gaps, without the data content of which the document is unusable for the user. Data filling up those data gaps can now be brought about either as additional data from the external data source by way of the network or the gap data can be stored locally - although separately from the remaining document - and as external data, once again only linking or index data would be provided for linking the gaps and the associated gap data.

In accordance with a preferred development of the invention which in this respect is to be considered as the best mode of carrying the invention into effect the apparatus according to the invention additionally has an encoding means with which the additional data that are transmitted by way of the data network can be encoded in order on the local side further to enhance the security of usable access to the documents: an interchange of the additional data - that is to say for example the sequence or gap data - , which interchange is protected from third-party access, preferably occurs in the mode of a code agreement, which forms the basis for the encoding procedure, between the external data source and the local computer system, and it is only after local decoding of those additional data that they can be processed by the linking means to afford usable documents.

In a further preferred embodiment there is provided an identification or a billing module with which items of information of the user can be ascertained and subjected to further processing, that is to say for example for the purposes of charge ascertainment and billing. (As a distinction in relation to the state of the art referred to in the opening part of the specification and concerning the general kind of system involved, identification of the external user by the data source is only necessary for that purpose). Between the host and the user there can be defined an electronic currency in the form of random character series which can be used only once ("one-time pads") which permits the user to pass on his rights in regard to reading the documents.

Also, in accordance with the invention, a control module provides for the friction-less data exchange with the external data source. The invention can therefore ensure that unauthorised copying and dissemination of the documents is impossible; at the same time however it is possible at the local user end not only to tolerate but possibly even promote any copying or transmission of the locally stored document data in order thereby to attain the largest possible potential user circle for the electronically published data. At the same time there is the advantageous effect that, in accordance with the invention, the volume of data to be transmitted by way of the network from the external data source is minimised and is limited only to the additional data according to the invention. In addition further optimisation in terms of data transmission from the point of view of amount and time can be achieved by compression of the external additional data (or also the locally stored document data).

In data formats, layers are used to make structures and changes more clear in the different levels of abstractions. These layers could include information about the position of important data or meta information about the format used, compression parameter or other description on the structural elements used. Changing the order of elements on a certain layer, with respect to the grammar rules that must be applied on this layer, implies that there will be no algorithm of reconstruction for the original sequence.

Changes in the sequence or order with respect to the grammar rules of a given layer, data format, formal language or human language implies that there is no detectable error in these statements. Therefore there are no criteria, to be found by observing the changed statement, that can assist in determining which of the possible combination of the smallest entity in the layer, respecting the grammar rules, is the correct and original one.

The grammar is given by rules that regulate the syntax in which the use of characters within a language is complete, consistent and contained.

Therefore, in accordance with the invention, in a development thereof, it is possible, using the redundancy in speech, to insert or displace words at different positions within a sentence without the content or the meaning of the sentence being affected thereby. That advantageously provides that individual identification of the source of illegal copies can be achieved by suitable individualised positioning of individual words. More specifically, in particular the separate transmission of the additional data (that is to say for example the sequence data) can be utilised to introduce a clear, subsequently identifiable word transposition or word combination which has no influence in terms of content.

In order to identify the final user of an electronic document, the restoration of a document could be done within the grammatical rules of underlying data structure. Because not all changes or deletions of structural elements render a document useless, rules for hierarchical classes, layer or data structure could be derived that do not guarantee a change in the meaning or context of a statement. On the other side, rules exist that certainly change the meaning of a document. For example, a change in the type of numbering (Arabic numbers, Roman numerals, alphabetical, etc.) in an ordered list does not change the meaning of a text. Furthermore, the order of an unordered list of variables which are assigned to independent values usually has no influence on the operation of computer programs. On the other hand, rules that change or delete structural elements after a punctuation mark which are applied to electronic texts result in a prepared document that probably has no usable content.

A method to identify the final user is that statements or paragraphs with the same content, but a bit differently prepared could be kept in the public part of an electronic document in parallel, so that a combination of different statements containing only small differences is uniquely prepared, and these clues could be used for a subsequent identification of illegal copies.

Hierarchical classes are similar to layers.. Operations on a level could be done by rules that change or delete structural elements with respect to the grammatical rules due to the order and sequence inside these hierarchical classes. These rules transform the order of the original data into a new order in the group of accompanying entities that therefore contains no errors in the grammar rules used.

In pictures the hierarchical classes are lines or columns, frames or interframes in MPEG coding, elements in databases of the same data structure. Assigning variables to certain values or groups of statements in computer programs that could operate without instructional errors in a contained context by a definite input and output are likewise hierarchical classes.

In accordance with further preferred developments of the invention, the method according to the invention is carried into effect in that the procedure according to the invention is conducted in platform-independent mode (that is to say independently of hardware or software system environments used) and additional routines for integrity checking are incorporated, with which it is possible to ascertain whether the external user is properly accessing or whether inadmissible attempts at access are being undertaken.

In accordance with the invention, therefore, the method and the apparatus can be used to provide that the user may only apply precisely defined processes to the documents - for example printing-out can be permitted, but this can also be excluded by means of a suitable device (and possibly external control by way of the network). In addition, the invention ensures that storage of the locally generated, usable document information is not possible.

In addition, in accordance with a development, an electronically published document can be provided with an (electronic) expiry date in absolute or relative form, in which case also the intended aim of the expiry date cannot be foiled by manipulative measures at the local computer system as a corresponding item of data which is linked to a document is always dependent on the external item of data transmitted by way of the network. Updating operations and the like for the document can be effected in a corresponding manner. Generally, the possibility to provide security according to the invention always means any opportunity to update such an electronic document.

To judge the effectiveness of the protective procedure presented here, the following concepts can be referred to with regard to the present invention.

Generally, information is treated as a fundamental entity, like messages which are exchanged between source and receiver. The protection of the information results from the question of how large the share of information is that can be obtained by an active or passive auditor or eavesdropper from the coding employed. The inadequacy of this description results from the circumstance that neither in cryptography nor in the information and coding theory information has a semantic meaning or context that is addressed to. Within these theories there is no semantic level, and thus there is no technically or conceptually usable meaning for the concepts of context, redundancy or logical usability.

Information content is, as negative entropy, a measure of the unexpected content or surprise in the content which a message or information contains. The numerical sequence 1-2-3-4 contains, according to information theory, the same information content as every other combination from 1 to 4. If a combination of independent numbers 1, 3, 2, 4 is to be returned to the original form 1-2-3-4, then information about the sequence must be given in the form of an operating instruction which was not previously explicit in the original numerical sequence 1-2-3-4.

Given the internal redundancy of language, data formats or file formats, very often the next element can be predicted with a probability above chance. Thus in the German language it can be inferred with high probability that an "e" will more probably be followed by an "r" than a "y". Likewise, it can be expected with high probability that a grammatical article will more probably be followed by a substantive than a verb. Nevertheless, these attack variants on a mixed or de-addressed data unit indicate that the deletion or changing of a structural element will not offer any clues for the reconstruction of the sequence. The divisions within sentences would thus be disadvantageous. With the deletion or changing of a structural element within a word, e.g., with a hyphen, one can usually find the precise continuation of a word by using a dictionary, and thus the reconstruction of this structural element is possible without the use of external data.

Through the logical arrangement of bit information which, for example, through individual characters reveal whole sentences, statements are created. This information can then receive a semantic meaning in regard to a selected data convention and together with its creation or meaning context. This meaning is in addition socially determined. The meaning of the individual sentence implies more or is more precise than the sum or the intersection of word meanings, and a text meaning is correspondingly more than the sum or is more precise than the intersection of the sentence meanings.

By mixing or scrambling entire paragraphs or sentences in texts, e.g., by the use of punctuation marks or by de-addressing within an electronic document, the separation of a semantic statement from its context is achieved.

To understand a semantic statement A we always need a knowledge of its context. The context is, however, by definition not part of this semantic statement A. The context can make a statement appear to be meaning-related, reference-related, language-related, world-related or use-related. The context consists of the surroundings in which a statement is understandable. The statements in a sentence, paragraph, page, text, video, program thus always need the context which results from the other statements which are connected in parallel or sequentially in the immediate or indirect surroundings.

Alone the deletion or changing of the natural sequence within a more comprehensive semantic statement creates a set of independent statements which possess no information about their original inner connection with neighboring statements. The reason for the use of this procedure is the fact that on the semantic level the entire statement is more than the sum of and is more precise than the intersection of the individual statements.

A sentence represents a substantively closed data unit about whose continuation one can only speculate but not even in a probability-oriented manner. An application of redundancy or the use of redundancy in the independent reconstruction of an electronic text is in principle not possible on the level of semantics due to the non-inferable context. For these fundamental reasons it is impossible to discover an algorithmic approach to recognizing how a sentence, paragraph, video or program has to be completed. Neither on the electronic, technical level, nor as an instruction to the human mind can a reconstruction of an electronic document consisting of closed substantive data units be carried out, if the structural elements are lacking.

A clear text attack by use of the complete output and the access to the complete prepared electronic document does not necessarily offer all information of the original document. The jump addresses in hyperlinks and the corresponding destination addresses could be delivered by the external operational instructions as well. Furthermore, fake reference or destination addresses could be included so that the completeness of an illegal reconstruction and its quality could never been proven by an attacker.

The invention employs especially the linear structural elements between semantic entities or the de-addressing of frequently appearing names. These structural elements must not necessarily be contained in digitally coded information in the original data. If these structural elements are removed from an original, a so-prepared electronic document can be restored to the original state only with the aid of externally introduced operating instructions.

An electronic document can thereby be viewed as a passive or. active program which runs only on a linking intermediate layer, thus on a linking unit which cannot be circumvented and which it is not reasonable to circumvent. This linking unit transforms all the code instructions contained in this program into code instructions of the original document, so that only the thus-arising data leads as direct electronic instructions or as instructions for the superordinated, higher or lower program interfaces to meaningful results. These instructions on the linking unit can be realized within the processor hardware with conventional electronic integrated circuit techniques.

The linking unit brings volume data and data externally obtained e.g. from a network or from a locally protected data area, that is temporarily used but by network updated, together in order to achieve a restoration by using them as operating instructions and for the creation of the structural elements so that the original structure of the electronic document is restored or reconstructed and thus can be turned into a later output.

Programs, such as for example a text program, a viewer for pictures, a video or audio-player, a database management system implemented for a database, a virtual machine on a client computer, in which programs can be started from the network or from a locally protected, temporarily used and by network updated, data area can possess a linkage unit which inserts structural elements in prepared volume data by separately added operating instructions, in order that afterwards the reconstructed electronic documents can be represented on an output unit, reasonably, usably, consistently, reliably and correctly. Furthermore, the protection can be realized in such a way that it is not immediately recognized whether the document is really complete and usable after an illegal reconstruction.

An advantage to the state of the art technology is that an illegal or unauthorized reconstructed electronic document is different to original published data because it contains structure elements that were deleted or changed in the original. Because the illegal copy is delivered by some unknown or unauthorized source, the final user can never be sure that he really got a electronic document that is equivalent to the original one from an authorized source and that this fake copy really offers a meaningful, reasonable, usable, consistent, reliable and correct content as was intended by the original publisher. The separate transfer of the structure elements by additional instructions from a known source that is always carried out on demand, guarantees integrity and correctness of the delivered or used document. If the client software is able to identify the source for sure, which can be done by conventional state of the art cryptological protocols, then an unauthorized insertion like spoofing could be identified by the final user, because reconstructed parts of the changed documents will lead to some meaningless and unusable output, that will easily be recognized by the final user.

In the same reliable way a time restriction could be included in a document. This feature can also be used to include this limitation from the external operating instructions.

The insertion of a sequence for the reconstruction of the context is an important instrument for the management of documents. In a subsequent, flexible alteration of this document through an altered or expanded edition, old sentences or paragraphs can be left out or delivered in a new order by means of separately added structural elements. By the transmission of the few data which have changed between editions a desired alteration during output is made possible on the output computer by means of a structural element that results from a reference to the newly inserted passage.

Update-management which brings electronic documents up to date is thus an additional advantage of this invention which goes beyond protecting the documents against unauthorized distribution. The repeated transmission of data which are already available on the local computer is made superfluous. Even programs can be efficiently, flexibly or rapidly brought up to date or expanded.

A further advantage exists in the possibility of making the distribution of operating instructions dependent on payment. The use of electronic documents can be paid for by using a pay per use procedure. Only a small amount of data has to be exchanged by some sort of money, electronic payment or MicroPayment. The correct operational instruction need to provide for a share of the electronic document a down payment, that will be sent by the end user at the client in advance. The marketing and sales of information can then be oriented to the actual use of the electronic document. The sale of unused services or an unused information presentation can thus be avoided by a final client. Therefore, the data of a prepared electronic document could be free, only the data needed to create the usability and readability must be paid for. In this sense, this concept offers a technology for super distribution.

The release of an electronic document by external operational instructions can be done by central or decentralized servers.

Because all usage rights are offered by external server, the final user does not necessarily have problems with a backup. He should only store the internet address where he original found the electronic document and his personal notices all other information could be stored on a external server and can be delivered via network. The management of usage rights could be done by a releasing server. Therefore, a small sized recovery could be offered by network services.

In comparison to some other copyright protection methods neither additional hardware will have to be used nor given hardware needs to be modified.

A reduction of quality in the electronic document could be included in its data by replacing the bi-directional structure element, given by a double linked linear chain, with a singly linked linear chain.

In animation, data formats like FLI, FLC, OpenGL, GKS or VRML are used for interactive and non-interactive 3D presentations. In VRML objects are described by more elementary geometric objects with spatial relationships in between and allocations to the assigned object of properties like transparency, color, texture, sound or constraints on motion. Structural elements, like relative position or the assignment of a property to the original value, could be altered for reasons of security or updates. An unrecognized change in the assigned property could also be used for a restoration, in order to identify the person who has misused documents, when accompanying data are stored in a releasing server.

Passive computer programs are usually utilized on multitasking, multithreading or multi-user operations systems. These programs are complied to the language special to the operating system and not for the processor, with its restrictive machine language. The statements of these passive computer programs refer to functions, which are included and collected in libraries and coded in a machine language of the processor. The reference of a statement in a passive program to the program library is a structural element that could be removed and could be used for a later reconstruction for security or update reasons.

The machine language could also be changed with respect to the grammatical rules of the processor language. This change could be made by altering the data addresses or the order or sequence of grammatically independent groups of fundamental entities. Only with a few operational instructions, delivered by external sources, is a linking unit able to reconstruct the usability of a machine code. These active computer programs could be used, e.g., on special purpose hardware or on computers intended for non-general purposes.

Further advantages, features and details of the invention will be apparent from the following description of embodiments with reference to the drawings in which:
- Figure 1: is a diagrammatic operating circuit diagram of the apparatus according to the invention for protecting electronically published documents in accordance with a first preferred embodiment with additionally illustrated possible developments,
- Figure 2: shows a flow chart of the method according to the invention for protecting electronically published documents in accordance with a preferred embodiment,
- Figure 3: shows a flow chart of an updating and test method which is carried out in the context of the method shown in Figure 2, and
- Figure 4: is a diagrammatic representation of an electronically published document in the protected non-linear state (a) and in the state (b) of being treated in accordance with the invention and linearised by the addition of linking data.

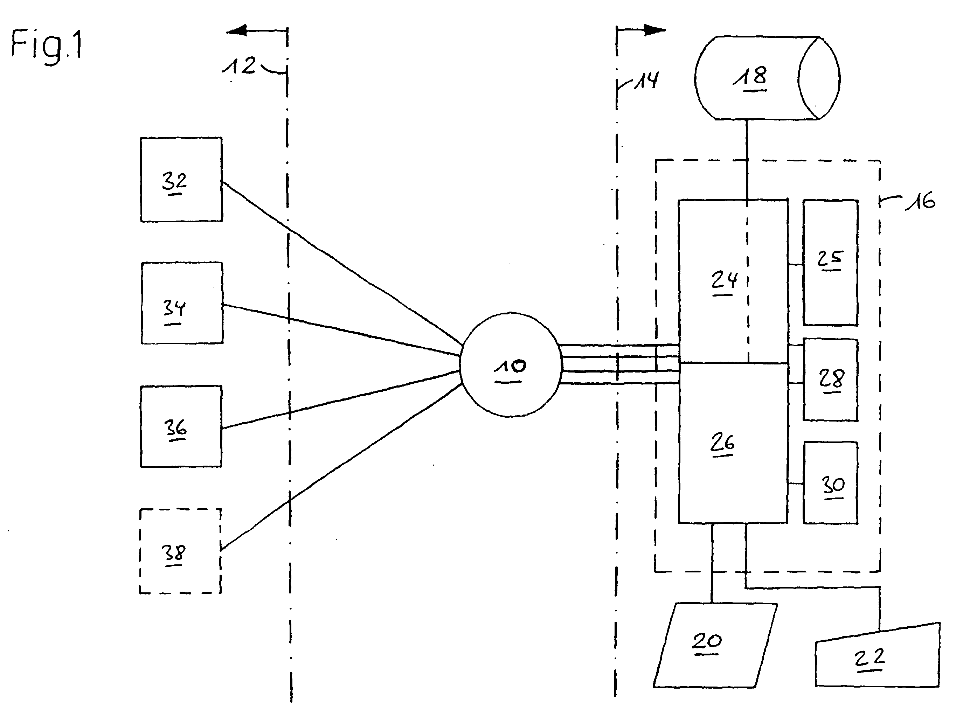

An electronic network 10 which can be any private or public network for connecting a plurality of electronic data processing installations for the purposes of data exchange between them, and which in the present embodiment is the publicly accessible Internet, forms a connection between an external host system, delimited by the line 12 in Figure 1, and a system comprising a plurality of local computers, delimited by the right-hand line 14.

While the host system 12 is operated by the supplier and distributor of user data which are to be supplied electronically by way of the network 10 - in the illustrated example, being graphic data - the local computer is provided for calling up and representing the user data supplied by the operator of the host system 12, at the location at which the local computer 14 is disposed. For that purpose the local computer 14 has a processing unit 16 which is bordered by the broken line and which is connected on the one hand to a document store 18 and on the other hand to an output unit 20 and an input unit 22 and which co-operates with those peripheral devices. The processing unit 16 is also adapted to co-operate with the network 10.

The document store 18 - so-to-speak the local document delivery unit - is designed in the present embodiment in the form of a local mass storage device which is directly connected to the processing unit and which already contains constituents of the document to be electronically published by way of the network. The output unit 20 forms the connection between the local computer 14 and the user and is selected in dependence on the document to be published: in the present case of publication of electronic drawings and graphics, the output unit 20 would substantially comprise a monitor which is suitable for the representation of such graphics, with associated data processing, while in other situations of use - for example involving the transmission of texts or additional sound as in the case of audiovisual electronic media - an acoustic output unit, a printer or the like may additionally or alternatively be connected. The input unit 22 is for example in the form of a keyboard or mouse and serves to the user for procedural control or for the input of commands for calling up the documents which are electronically published in accordance with the invention.

As a component the central processing unit 16 has a code unit 24 with associated code store 25, a document structure or construction module 26, a dialogue control module 28 and a clock 30. The Figure does not show a communication module which is provided for co-operation with the network 10.

In comparison, provided in the host system 12 is a code server module 32, a copyright server module 34, a billing server module 36 and - optionally and in accordance with a preferred development - a document or update server module 38.

The function and mode of operation of those modules are described hereinafter, wherein in the present embodiment the functions of those modules are preferably effected by suitably programmed software in the host system 12 and in the local computer 14 respectively; however, as will be readily clear to the man skilled in the art, those modules could also each be in the form of discrete hardware modules with conventional electronic circuitry technology which is wired in the specified manner in principle and moreover in a manner with which the average man skilled in the relevant art is familiar. The term "server" refers to the arrangement of the respective module in the host system.

The purpose and function of the code unit 24 (also meaning the data safeguard unit) is to provide for a code agreement in the data exchange with the code server module 32, that is to say to make available to the code unit 24 a clear and secret code which is safeguarded against any access and with which then the code unit can decode an item of sequence or gap information transmitted by the copyright server module 34 and prepare it for use by the document construction module 26 in the local computer: by means of that decoded item of sequence or gap information the data construction module 26 then accesses the data bank of the document store 18 and uses the item of information of the copyright server module, which is received over the network, in order to process the unordered or gappy data of the data store 18 to afford complete user data which are then made available to the user by way of the output unit 20.

While the dialogue control module 28 controls co-operation in accordance with the protocol of the functional modules or correct execution of the method (to be described hereinafter), the clock 30 serves additionally to process possibly periodic user information - for example moving images - in a manner which is suitable for the user.

Finally, on the side of the host system, the billing server module 36 is provided for correct identification of the local user, ascertaining the extent of use thereof at the documents published by way of the network, and finally generating appropriate billing data.

The document/update server 38 is finally provided for the purposes of use in which not only sequence or gap information, concerning document data which are stored or present locally (document store 18) are used, but possibly additionally or instead thereof such data are supplied (published) by way of the network, for example in the respective most up-to-date form present at the operator host end. In addition, as will be set forth in detail in the following description of the method according to the invention, the module 38 serves for updating operating system components at the user end.

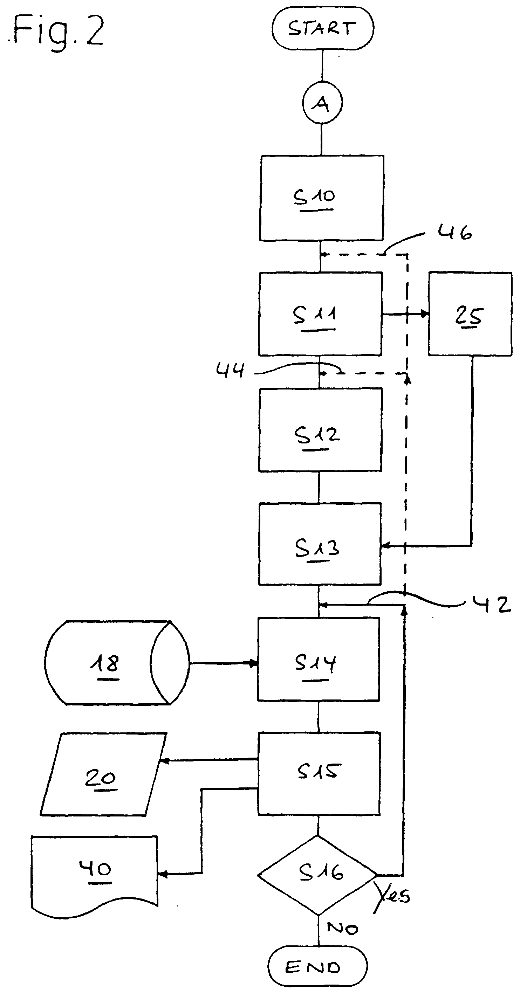

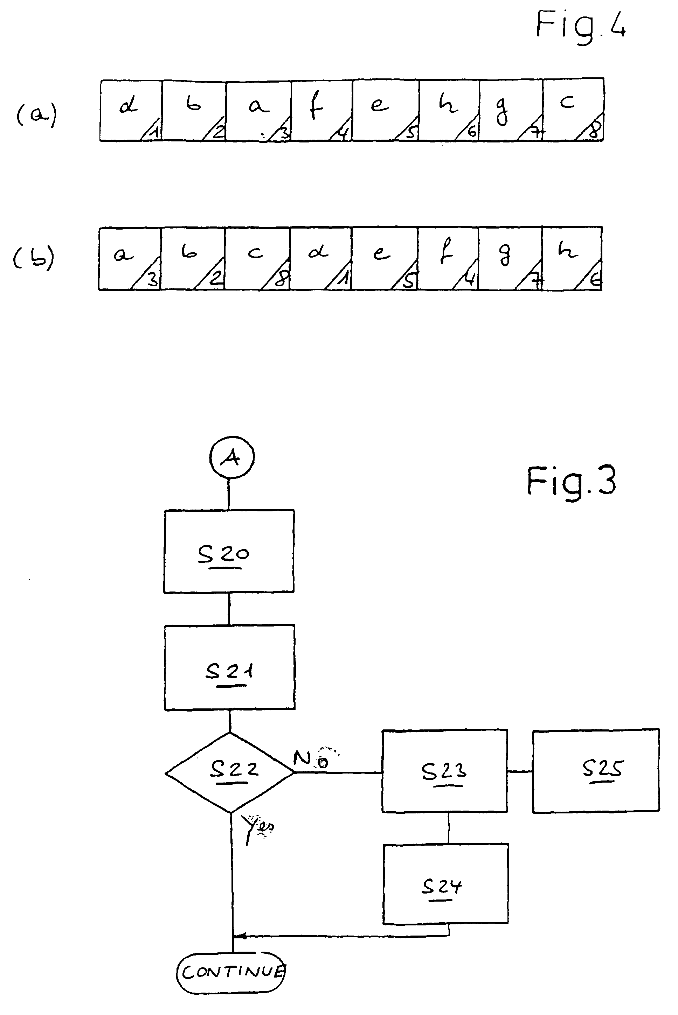

The procedure of the method according to the invention for protecting electronically published documents will now be described hereinafter with reference to the method flow charts in Figures 2 and 3 with reference being directed to the embodiment described with reference to Figure 1.

In order clearly to set forth the method and to describe a possible form of local storage of the document data (in the data store 18), attention is additionally directed to the view in Figure 4 showing by way of example user data arranged in the storage sequence and the processed form thereof. As shown in Figure 4 (a), an item of electronic graphics is deposited for example in eight physically successive storage locations in the data store 18, wherein the sequence of the physical storage locations 1 to 8 with the information units arranged therein, as shown in Figure 4 (a), does not correspond to the usable (useful) sequence which is meaningful for a user - on the contrary there is lacking a sequential link between those nonlinearly stored data units in order to arrive at a meaningful comprehensible graphic data file a-b-c-d-e-f-g-h (Figure 4 (b)). However that sequence information which in the illustrated embodiment in Figure 4 would correspond to the arrangement of the respective physical storage locations in the sequence 3-2-8-1-5-4-7-6 is not contained in the document store 18 but is transmitted from the host system externally over the network 10.

At the beginning of the method according to the invention a network connection is made for the host system 12 by way of the network 10 to the local computer 14; that network connection depends on the conditions and protocols which are necessary or typical for the network 10 used.

There now follows in the flow chart of Figure 2 the execution of an updating and test routine (indicated at A in Figure 2, illustrated in Figure 3), which will be further discussed in detail hereinafter.

In step S10 the integrity of the local system is then tested - therefore a test is made by means of inquiries and test procedures to ascertain whether misuse attempts have been made in the local computer system or precautions are involved in respect thereof - the local computer system is initialised for the subsequent code and data exchange with the host system and the necessary identification and billing data with the billing server module 36 are transmitted.

The subsequent code agreement in step S11 then involves the transmission of a code from the (secure) code server module 32 of the host system 12 to the local computer; the code unit 24 stores that code in the code store 25.

In step S12 the local computer then receives the encoded sequence signal, that is to say in the example shown in Figure 4 the numerical sequence 3-2-8-1-5-4-7-6, in a form which is encoded by that in accordance with the code agreement (step S11). The code in the code store 25 then permits decoding of that sequence signal in step S13 by the code unit 24.

There is therefore ready for the document structure or construction module 26 the (decoded) sequence signal with which the module 26 can now access the document store 18 and process the data stored therein, in accordance with the received and decoded sequence, in readable and usable fashion (step S14) so that then in step S15 those processed useful data can be outputted by way of the display screen output unit 20 and/or a printer unit 40.

In step S16 the system then checks whether there is either a corresponding user input or inquiry for further documents to be processed, or whether, due to the nature of the electronically published document - for example a film - there is to be a continuous read-out of data from the data store 18. The solid-line arrow 42 describes the path of that feedback loop which goes back again to a location before the step S14 - document construction.

Alternatively the method could also involve feedback connections to other earlier method stages: thus for example, in the manner shown by the arrow 44, the loop would be closed after step S16 to a location prior to the step S12 so that in this case the local system would receive a new encoded sequence over the network, for further useful data which are to be locally processed, and would decode it only prior to repeated execution of the processing procedure and display in steps S14 and S15 (step S13). As a further alternative the loop could even be closed at a location before the step S11 (arrow 46); in that case a new code agreement would be made and then the subsequent loop would be executed again.

It will be seen from the foregoing that the data security of the connecting data can be further enhanced in particular by loops with the arrows 44 and 46 respectively.

Reference will now be made to the flow chart in Figure 3 to describe the upstream-disposed procedure as indicated by letter A in Figure 2, namely updating, which is effected in accordance with a preferred development of the invention, of the operating program which is performed on the local computer for reception of the electronically published documents.

That program is based on the consideration that operating software of that kind on the one hand can determine the performance of the described method and the co-operation of the described modules, but in addition it also has routines and inquiries which are suitable for recognising and preventing unauthorised accesses, attempts at manipulation and the like misuses on the local system. In the illustrated example the programming language Java is used to carry out the described method. The system also uses a security module which is integrated into Java in order to guarantee protection of the encoding procedures. It is also to be assumed that the local operating program environment on the local computer 14 is permanently modernised and updated, while techniques and procedures for detecting misuse are also being continuously further developed so that it is not always the most up-to-date version that is to be found on the respective local computer 14.

By means of the routine described in Figure 3, it is now possible not only to put the local operating system environment into the most recent state by way of the external host system 12, but it is also possible by way of that updating operation externally to check whether the local user is operating the local computer system 14 in the authorised and proper manner, that is to say whether the situation involves integrity.

In step S20 the operating program - in the present embodiment running under Java - is started, whereupon then in step S21 the program makes the connection to the external host system 12. Step S22 then involves inquiring whether - compared to corresponding identification data - the local system 14 has the most up-to-date version; if that is affirmed, the routine reverts to the method as shown in Figure 2. If however it is found in the inquiry of step S22 that the locally operated version is not in the newest state (no), the newest version is sent in step S23 and started (S24) and the old version is terminated (S25). That now provides the prerequisite for the prescribed integrity to be checked in subsequent step S10 (Figure 2) by security routines.

In particular in that way, even when a successful attack on the content of a document is known, a reaction can be immediately afforded by virtue of the fact that the Java operating program is correspondingly altered and thus similar repetition of that violation of protection is impossible.

Besides the above-described method steps it is necessary accurately to define and possibly limit the procedures to be applied by a user to the electronically published documents. For example output onto a printer 40 would in fact permit copying and unauthorised duplication of the document on paper, although admittedly with a loss of quality. In addition it would be necessary to ensure that (local) access to or storage of the outputted data (step S15 or document structure/construction module 26) is not possible so that here too it is not possible to re-use the data, that is to say misuse is excluded.

In the manner described in accordance with the invention, by electronic publication, for example a (locally) stored document can be provided with an expiry date which is produced by configuration of the Java program and which is either predetermined as an absolute date (in the form of a defined moment in time), or it is possible to allow a right of use which is limited in terms of time (n hours); both options however require on-line access on the part of the user, in the manner according to the invention.

In accordance with a development of this aspect a document could require further updating procedures due to its expiry date. That development appears to be particularly suitable for reference books or manuals, teaching organisations or the like.

A further advantage of this invention could be seen in the ability to restrict and register the access of a certain person to confidential information. Therefore confidential and non-disclosed digital material could be controlled by a remote releasing server.

An anonymised signal which is sent out from the (transmitted) document could indicate to the external host system how frequently the document is read or called up; in a corresponding manner it would be possible to detect a period of time or other, on-line media-specific data, so that there is the possibility in a simple and usable manner of acquiring data for improving the on-line publication availability. In addition constructive market investigations or the like are also possible.

In quite specific terms the present method involves highly effective copying protection in relation to media stored on Compact Discs (CDs): copying of the CD serving as a local document store (reference numeral 18 in Figure 1 and Figure 2 respectively) could not be prevented even if the data were stored on that CD in the manner shown in principle in Figure 4, provided with gaps, or put into a non-linear condition in some other manner; however the copying procedure would be meaningless for the unauthorised user. On the contrary, with this aspect copying of the local data store would even have to be considered as desirable as that enlarges the potential circle of users and use is possible in any case only by host contact.

In that respect the method according to the invention is not limited to separate transmission or addition of a sequence of the (non-linear) document data as described in Figure 4; on the contrary, it is additionally or alternatively possible to store a document with data gaps in the local data store and then either to supply the associated gap data externally by way of the network or also to locally store same in order then externally to supply only indexing or linking information relating to the link between the gap data and the (rest of the) document. Those gaps can be for example individual words of a text document. In addition certain data units can repeatedly occur in a usable sequence of said data units. Words or short phrases used more than once could be included in the text only once. The usage at the original position could be guaranteed by an operational instruction that moves the phrase from its unique position in the prepared document to an intended displayed position.

In the practical performance of electronic publication of written or typed documents, a viewer is necessary for representing the text, such a viewer having a limited and configurable functionality; for example the output unit must have a copying and printing option which can be activated or deactivated externally, that is to say by Java. That viewer should also prevent unauthorised access to the generated text. While relevant text formats are ASCII, RTF, HTML, Postscript or PDF, in regard to practical performance the important considerations are functionality, universality and suitability in connection with current software packages. In this connection PDF or HTML respectively should be able to serve as a basis for the publication of documents involved in the publishing industry.

A further aspect in regard to practical performance is the erasure of all page references within the documents in order to prepare them for local secure data storage, in which case then those necessary links can be produced again (in controlled manner) for document usage by the items of sequence information, over the network. In the case of so-called hypertext media, a use according to the invention can already be involved by removal of the so-called "links", the speech-inherent connecting structures.

Digital Videos or films are produced in MPEG, MotionJPEG or AVI File format. Digital videos can be delivered in full-size and full motion video streams, uncompressed or by using compression and accepting a loss of quality, the data rate can be reduced. With special compression methods, constant or variable data transmission rate are achieved. In MPEG Format a video is separated into periodic individual high resolution pictures or frames, provided in an intraframe coding. An interframe coding by forward predicted frames or bi-directional predicted frames is used to encode the differences between frames. By changing the order of the delivered intraframes or interframes the quality of the digital video stream could be reduced. The reconstruction of a high quality image can be done by rearranging the correct sequence in the viewer with additional operational instructions on an accompanying layer of the protocol.

Different methods of compression are applied to data with high redundancy. Compression can be differentiated into quality loss (lossyl and in no quality loss coding. Accordingly, in lossy coding irrelevancy is also eliminated.

In compression methods error correction or error recovery methods or audiovisual synchronization or discrete Fourier or Cosine transformations are usually applied. Changes in the order or sequence at a certain position in a compressed data stream can be detected though not located by algorithms, and they have a large impact on the decoding process or on the usability of the decoding data.

Database management systems handle fixed and variable data types differently. Depending on the handling of lists which contain the length of variable data records, the modification of structural elements would reduce the quality of a database and affect the performance and reliability of the content.

The electronic publication process described could also be generalized under the invention as follows:

In order to make security measures independent of the type of data transmission, the process is structured or is operated asynchronously. Data of the so prepared electronic documents are sent to the customers in an open or public manner by e.g. CDs, broadcast or via Internet. The readability is arranged by a direct customer contact with a releasing server, through which the user payment is made.

After a payment or a releasing is completed the operational instruction has to be delivered in a secure manner to the program that reconstructs the original document from an external source.

This transfer could be done by an online connection of the client to the server. On the Internet these connections are realized by one or several steps in between. The message that has to be delivered to the client might be stored on several gateways or routers temporarily.

A synchrony or an online contact between final user and server is not necessary as long as the transfer is realized in a manner that guarantees a secure transfer of the few data for reconstructing the usability. Therefore, these operational instructions could also be stored on a movable, secure but temporary electronic memory or an intermediate memory with an electronic unit that provides a secure data exchange only to the authorized user and destination. This hardware is state of the art and is realized in smart cards or in dongles. The exchange procedures could also be realized by conventional, state of the art cryptological protocols. This smart card that might have to -- due to security reasons -- contain some identification or authentification data, could be loaded with operational instructions and authorized for a definite purpose at some other distant or separated location, e.g. library or bookstore.

Another transfer of the operational instructions could be realized by a state of the art periodic or non-periodic broadcast of these individual instruction data. These data have to be identified only by an end user program that got a registered access right to the requested electronic document by the above releasing server. The method and software of how to extract data from this public broadcast data stream could be public as well. The extraction algorithm only needs a secret session key or secret operational instructions to identify or to select only his requested instructional data. In order to be temporary off-line from a network in this manner, additional hardware has to listen for such broadcast messages.

All transfer or transmission methods need to have in common that they transfer or deliver data from an external source to the local source in a secure manner. All these transfer technologies have to provide in accordance with the operation of the invention as disclosed in figure 2 and supporting disclosure either an online or at least one temporary online contact to a releasing server during a status that is usually offline. Therefore, even a smart card needs an online contact at least once in order to be prepared for offering the necessary data so that a final user is able to operate with the requested, usable electronic document.

Network access is necessary for security and authentication reasons. If a smart card or a dongle is used to store operational instructions, access to these data must be provided by a separate access control procedure only. This access control procedure can be circumvented by sharing the smart card, if no additional online authentication is included. Because all information about structural elements is stored on a releasing or copyright server, a network connection is always necessary in order to transfer the instructions for reconstructing the structural elements directly or via intermediate, access-restricted, movable memory, as for example a smart card.

A second connection is optional. It must be incorporated into the communication process if the publisher of a document wants to guarantee that use of the document will be obtained only under certain circumstances, e.g., by users who have paid the royalties or on computers specially registered for this purpose.

## Claims

1. Apparatus for protecting electronically published documents with a local computer system (14) which can be connected locally by way of a data transmission network (10), to an external data source (12) and which is adapted to call up, execute, and/or output the electronically published documents, wherein the local computer system (14) comprises local data storage means (18) which is adapted for the storage of data of the electronically published document in a form which is not usable for a user, wherein the local computer system (14) further comprises means (24) for receiving and processing additional protection data provided by the external data source (12) by way of the data transmission network (10), as well as a linking means (26) which is adapted to link a storage content of the local data storage means (18) with the additional protection data and to produce the electronically published document therefrom in a form usable, meaningful and/or suitable for sensory perception by the user, wherein the local computer system comprises output means (20) selected in accordance with the type of the document to be electronically published, adapted to call up, execute and/or output the document in the form usable, meaningful and/or suitable for sensory perception by the user, wherein the local data storage means (18) is adapted to store the electronically published document in a non-reconstructed, in particular a non-linear form, wherein the non-reconstructed document can be converted into a reconstructed linear document which is usable by the user by the action of the linking means (26), utilising the additional protection data, **characterised in that** the local computer system (14) is designed to operate such that a local storage of the produced document in the form usable, meaningful, and/or suitable for sensory perception is not possible, and a readability and usability of the produced document is dependent, in each session, on an online, or at least one temporary online, authenticated contact between the local computer system (14) and the external data source (12) via the data transmission network (10).

2. Apparatus as set forth in claim 1, **characterized in that** the linking means is adapted such that structural elements of an electronically published document are modified by operational instructions derived from the additional protection data in order to effect the conversion to the reconstructed document.

3. Apparatus as set forth in claim 1 or 2 **characterised in that** the local data storage means is a magnetic and/or optical mass store (18) in which volume data of the electronically published document are stored in a plurality of storage locations which are not interrelated, and wherein the additional protection data denote an interconnection and/or a sequence of the storage locations.

4. Apparatus as set forth in claim 1 or 2 **characterised in that** the local data storage means is a magnetic and/or optical mass store (18), wherein volume data of the electronically published document which is stored therein have data gaps and the data gaps can be directly closed by the additional protection data, or wherein the additional protection data include storage location identifications which refer to separate storage locations of the local data storage means (18), in which gap data are stored in a manner corresponding to the data gaps.

5. Apparatus as set forth in one of claims 1 through 4 **characterised by** an encoding means which is embodied by means of a first module (32) of the external data source and a second module (24) of the local computer system and which is adapted for the protected transmission of the additional protection data from the external data source (12) to the local computer system (14).

6. Apparatus as set forth in one of claims i through 5 **characterised by** an identification and/or billing module (36) which is adapted to identify a user of the local computer system and to acquire corresponding use and/or billing data.

7. Apparatus as set forth in one of claims 1 through 6 **characterised by** a control module (28) which is provided in the local computer system (14) and which is provided for dialogue and operational control of the data exchange with the external data source (12) and/or an operating unit (22) which is provided to detect user commands and to influence operation of the local computer system as a reaction to the user commands.

8. A method of protected representation of electronically published documents, comprising the following steps:
- establishing, in each session, an online, or at least one temporary online, authenticated contact between a local computer system (14) and an external data source (12) via a data transmission network (10),
- calling up document data from a local data storage means (18) which is part of the local computer system (14) and which stores the document data in a non-reconstructed, particularly a non-linear form,
- receiving (S12) additional protection data from the external data source (12) connected to the local computer system (14) by way of the data transmission network (10),
- linking (S14) the additional protection data to a content of the local data storage means (18) to produce document data in a form usable, meaningful and/or suitable for sensory perception by the user,
- calling up, executing and/or outputting the document data in said form, usable, meaningful and/or suitable for sensory perception by the user, by means of output means (20) selected in accordance with the type of the document to be published electronically, and
- preventing a local storage of the produced document data.

9. A method as set forth in claim 8 wherein the step of linking comprises the following steps:
- deriving operational instructions from said additional protection data
- modifying structural elements of an electronically published document with the operational instructions, thereby providing a reconstructed document in the form usable, meaningful and/or suitable for sensory perception by the user.

10. A method as set forth in claim 8 or 9 **characterised in that** storage of local document data is effected in a sequence which, without linking to the additional protection data, does not permit representation of the document data in the form usable, meaningful and/or suitable for sensory perception.

11. A method as set forth in claims 8 or 9 **characterised in that** storage of the local document data with gaps occurs in such a way that the gaps are closed only by linking to the additional data.

12. A method as set forth in one of claims 8 through 11 **characterised by** the following steps:
- identifying the user in the external data source (12), and
- exchanging user and/or billing data (S10) in respect of the user as a reaction to identification prior to reception of the additional protection data.

13. A method as set forth in one of claims 8 through 12 **characterised**
**in that** the step of receiving the additional protected data includes the following steps:
- encoding of the additional protection data by the data source (12),
- transmitting the encoded additional protection data by way of the data transmission network (10), and
- decoding the encoded additional protection data by the local computer system (14).

14. A method as set forth in claim 13 **characterised by** the following step:
- agreeing a code (S11) between the external data source (12) and the local computer system (14) prior to the encoding step.

15. A method as set forth in one of claims 8 through 14 **characterised by** successively calling up and representing a plurality of document units, wherein a set of the additional protection data is received for each of the document units.

16. A method as set forth in one of claims 8 through 15 **characterised in that** the reception of the additional protection data is dependent on a single and/or temporary access authorisation established by agreement between the local computer system (14) and the external data source (12).

17. A method as set forth in one of claims 8 through 16 **characterised in that** the data which are usable by the user include a text, produced in a language, and having a plurality of words, the words are provided in an arrangement which forms a meaning for the user, and at least one of the words is arranged by the effect of the additional data at a position in the text which permits clear identification and association of the text with the user.

## Patentansprüche

1. Vorrichtung zum Schützen elektronisch publizierter Dokumente mit einem lokal über ein Datenübertragungsnetz (10) mit einer externen Datenquelle (12) verbindbaren, lokalen Computersystem (14), das zum Abrufen, Ausführen und/oder Darstellen elektronisch publizierter Dokumente eingerichtet ist, wobei das lokale Computersystem (14) eine lokale Datenspeichereinrichtung (18) aufweist, die zum Speichern von Daten der elektronisch publizierten Dokumente in einer für einen Benutzer nicht brauchbaren Form ausgebildet ist, wobei das lokale Computersystem (14) ferner Mittel (24) zum Empfangen und Aufbereiten von durch die externe Datenquelle (12) über das Datenübertragungsnetz (10) bereitgestellter, zusätzlicher Schutzdaten sowie eine Verknüpfungseinrichtung (26) aufweist, die zum Verknüpfen eines Speicherinhalts der lokalen Datenspeichereinrichtung (18) mit den zusätzlichen Schutzdaten und zum Erzeugen des elektronisch publizierten Dokuments in brauchbarer, sinnvoller und/oder zur sensorischen Erfassung für einen Benutzer geeigneten Form dazu eingerichtet ist, wobei das lokale Computersystem eine in Abhängigkeit von der Art des elektronisch publizierten Dokumentes gewählte Ausgabeeinheit (20) aufweist, die zum Abrufen, Ausführen und/oder Darstellen des Dokumentes in brauchbarer, sinnvoller und/oder zur sensorischen Erfassung geeigneten Form für den Benutzer vorgesehen ist, wobei die lokale Datenspeichereinrichtung (18) zum Speichern eines elektronisch publizierten Dokuments in einer nichtrekonstruierten, insbesondere in einer nicht-linearen Weise ausgebildet ist, wobei das nicht-rekonstruierte Dokument in ein rekonstruiertes lineares Dokument umsetzbar ist, das für einen Benutzer, durch Wirkung der Verknüpfungseinrichtung (26) unter Benutzung der zusätzlichen Schutzdaten, nutzbar ist
**dadurch gekennzeichnet, dass** das lokale Computersystem (14) so zum Betreiben ausgebildet ist, dass es zu einem lokalen Abspeichern des erzeugten Dokuments in brauchbarer, sinnvoller und/oder zur sensorischen Erfassung geeigneten Form nicht geeignet ist und die Lesbarkeit und Verwendbarkeit des erzeugten Dokuments für jede Session abhängig von einem Online- oder mindestens einem temporären Online-authentisierenden Kontakt zwischen dem lokalen Computersystem (14) und der externen Datenquelle (14) mittels des Datenübertragungsnetzes (10) ist.

2. Vorrichtung nach Anspruch 1, **dadurch gekennzeichnet, dass** die Verknüpfungseinrichtung so eingerichtet ist, dass Strukturelemente des elektronisch publizierten Dokuments durch Arbeitsanweisungen, abgeleitet von den zusätzlichen Schutzdaten, modifiziert werden, um die Umwandlung in das rekonstruierte Dokument zu erreichen.

3. Vorrichtung nach Anspruch 1 oder 2, **dadurch gekennzeichnet, dass** die lokale Datenspeichereinrichtung ein magnetischer und/oder optischer Massenspeicher (18) ist, in welchem Volumendaten des elektronisch publizierten Dokuments in einer Mehrzahl von nicht zusammenhängenden Speicherplätzen gespeichert sind, und die zusätzlichen Schutzdaten einen Zusammenhang und/oder eine Reihenfolge der Speicherplätze bezeichnen.

4. Vorrichtung nach Anspruch 1 oder 2, **dadurch gekennzeichnet, dass** die lokale Datenspeichereinrichtung ein magnetischer und/oder optischer Massenspeicher (18) ist, Volumendaten des darin gespeicherten, elektronisch publizierten Dokuments Datenlücken aufweisen und die Datenlücken durch die zusätzlichen Schutzdaten unmittelbar geschlossen werden können, oder die zusätzlichen Schutzdaten Speicherplatzangaben enthalten, die auf separate Speicherplätze der lokalen Datenspeichereinrichtung (18) verweisen, in welchen Lückendaten entsprechend den Datenlücken gespeichert sind.

5. Vorrichtung nach einem der Ansprüche 1 bis 4, **gekennzeichnet durch** mittels eines ersten Moduls (32) der externen Datenquelle sowie eines zweiten Moduls (24) des lokalen Computersystems realisierte Codiermittel, die zum geschützten Übertragen der zusätzlichen Schutzdaten von der externen Datenquelle (12) zum lokalen Computersystem (14) eingerichtet sind.

6. Vorrichtung nach einem der Ansprüche 1 bis 5, **gekennzeichnet durch** ein Identifikations- und/oder Abrechnungsmodul (36), das zum Identifizieren eines Benutzers des lokalen Computersystems und zum Erfassen entsprechender Benutzungs- und/oder Abrechnungsdaten eingerichtet ist.

7. Vorrichtung nach einem der Ansprüche 1 bis 6, **gekennzeichnet durch** ein im lokalen Computersystem (14) vorgesehenes Steuermodul (28), welches zur Dialog- und Ablaufsteuerung des Datenaustausches mit der externen Datenquelle (12) vorgesehen ist, und / oder eine Bedieneinheit (22), die zum Erfassen von Benutzerkommandos und zur Beeinflussung des Betriebs des lokalen Computersystems als Reaktion auf die Benutzerkommandos vorgesehen ist.

8. Verfahren zum geschützten Darstellen elektronisch publizierter Dokumente,
**gekennzeichnet durch** die folgenden Schritte:
- Einrichten in jeder Session eines Online- oder mindestens eines temporären Online-authentisierenden Kontakts zwischen einem lokalen Computersystem (14) und einer externen Datenquelle (12) über ein Datenübertragungsnetz (10),
- Abrufen von Dokumentdaten aus einer mit einem lokalen Computersystem (14) verbundenen, lokalen Datenspeichereinrichtung (18), die die Dokumentdaten in einer nichtrekonstruierten, insbesondere nichtlinearen, Form speichert,
- Empfangen (S12) zusätzlicher Schutzdaten einer mit dem lokalen Computersystem (14) über ein Datenübertragungsnetz (10) verbundenen, externen Datenquelle,
- Verknüpfen (S14) der zusätzlichen Schutzdaten mit einem Inhalt der lokalen Datenspeichereinrichtung (18) zum Erzeugen von für den Benutzer brauchbaren, sinnvollen und zur visuellen und/oder akustischen Erfassung geeigneten Dokumentdaten,
- Aufrufen, Ausführen und/oder Darstellen der Dokumentdaten in brauchbarer, sinnvoller und/oder zur sensorischen Erfassung für einen Benutzer geeigneten Form mittels einer in Abhängigkeit von der Art der elektronisch publizierten Dokumentdaten gewählten Ausgabeeinheit (20) und
- Verhindern eines lokalen Abspeicherns der erzeugten Dokumentdaten.

9. Verfahren nach Anspruch 8, worin der Schritt des Verknüpfens die folgenden Schritte aufweist:
- Ableiten von Arbeitsanweisungen aus den zusätzlichen Schutzdaten
- Modifizierung von Strukturelementen eines elektronisch publizierten Dokuments mit den Arbeitsanweisungen, wodurch ein rekonstruiertes Dokument in einer brauchbaren, sinnvollen und/oder zur sensorischen Erfassung in einer für einen Benutzer geeigneten Form bereitgestellt wird.

10. Verfahren nach Anspruch 8 oder 9, **dadurch gekennzeichnet, dass** ein Ablegen der lokalen Dokumentdaten in einer Reihenfolge erfolgt, die ohne Verknüpfung mit den zusätzlichen Schutzdaten keine Darstellung der lokalen Dokumentdaten in der zur brauchbaren, sinnvollen und/oder zur sensorischen Erfassung geeigneten Weise gestattet.

11. Verfahren nach Anspruch 8 oder 9, **dadurch gekennzeichnet, dass** ein lückenhaftes Ablegen der Benutzerdaten dergestalt erfolgt, dass nur durch Verknüpfung mit den zusätzlichen Daten die Lücken geschlossen werden.

12. Verfahren nach einem der Ansprüche 8 bis 11, **gekennzeichnet durch** die Schritte:
- Identifizieren des Benutzers in der externen Datenquelle (12) und
- Austauschen von Benutzer- und/oder Abrechnungsdaten (S10) des Benutzers als Reaktion auf die Identifizierung vor dem Empfangen der zusätzlichen Schutzdaten.

13. Verfahren nach einem der Ansprüche 8 bis 12, **dadurch gekennzeichnet, dass** der Schritt des Empfangens der zusätzlichen Daten die Schritte aufweist:
- Verschlüsseln der zusätzlichen Schutzdaten durch die Datenquelle (12),
- Übertragen der verschlüsselten, zusätzlichen Schutzdaten über das Datenübertragungsnetz (10) und
- Entschlüsseln der verschlüsselten, zusätzlichen Schutzdaten durch das lokale Computersystem (14).

14. Verfahren nach Anspruch 13, **gekennzeichnet durch** den Schritt:
Vereinbaren eines Schlüssels (S11) zwischen der externen Datenquelle (12)und dem lokalen Computersystem (14) vor dem Schritt des Verschlüsselns.

15. Verfahren nach einem der Ansprüche 8 bis 14, **gekennzeichnet durch** das aufeinanderfolgende Abrufen und Darstellen einer Mehrzahl von Dokumenteinheiten, wobei für jede der Dokumenteinheiten ein Satz der zusätzlichen Schutzdaten empfangen wird.

16. Verfahren nach einem der Ansprüche 8 bis 15, **dadurch gekennzeichnet, dass** das Empfangen der zusätzlichen Schutzdaten abhängig ist von einer einmaligen und/oder temporären, durch Vereinbarung zwischen dem lokalen Computersystem (14) und der externen Datenquelle (12) festgelegten Zugangsberechtigung.

17. Verfahren nach einem der Ansprüche 8 bis 16, **dadurch gekennzeichnet, dass** die für den Benutzer brauchbaren Daten einen in einer Sprache erstellten Text mit einer Mehrzahl von Worten umfassen,
die Worte in einer für den Benutzer einen Sinngehalt bildenden Anordnung vorgesehen sind und
mindestens eines der Worte durch Wirkung der zusätzlichen Daten an einer Position im Text angeordnet ist, die eine eindeutige Identifikation und Zuordnung des Textes zum Benutzer ermöglicht.

## Revendications

1. Appareil pour protéger des documents publiés électroniquement avec un système d'ordinateur local (14) qui peut être connecté localement au moyen d'un réseau de transmission de données (10), à une source de données externe (12) et qui est adaptée pour appeler, exécuter et/ou fournir les documents publiés électroniquement, dans lequel le système d'ordinateur local (14) comprend des moyens de stockage de données locaux (18), qui sont adaptés pour le stockage de données du document publié électroniquement sous une forme qui n'est pas utilisable par un utilisateur, dans lequel le système d'ordinateur local (14) comprend en outre des moyens (24) pour recevoir et traiter des données de protection supplémentaires fournies par la source de données externe (12) au moyen du réseau de transmission de données (10), ainsi que des moyens de liaison (26) qui sont adaptés pour relier un contenu de stockage des moyens de stockage de données locaux (18) avec les données de protection supplémentaires et pour produire le document publié électroniquement en provenance sous une forme utilisable, ayant un sens et/ou étant adéquat pour une perception sensorielle par l'utilisateur, dans lequel le système d'ordinateur local comprend des moyens de sortie (20) choisis en fonction du type de document à publier électroniquement, adaptés pour appeler, exécuter et/ou fournir le document sous la forme utilisable, ayant un sens et/ou adéquat pour une perception sensorielle par l'utilisateur, dans lequel les moyens de stockage de données locaux (18) sont adaptés pour stocker le document publié électroniquement sous une forme non reconstruite, en particulier une forme non linéaire, dans lequel le document non reconstruit peut être converti en un document linéaire reconstruit qui est utilisable par l'utilisateur par l'action des moyens de liaison (26), en utilisant les données de protection supplémentaires, et **caractérisées en ce que** le système d'ordinateur local (14) est conçu pour fonctionner de sorte qu'un stockage local du document produit sous la forme utilisable, ayant un sens, et/ou adéquat pour une perception sensorielle ne soit pas possible et une lisibilité et une utilisabilité du document produit dépend, dans chaque session, d'un contact authentifié en ligne ou au moins temporairement en ligne entre le système d'ordinateur local (14) et la source de données externe (12) par l'intermédiaire du réseau de transmission de données (10).

2. Appareil selon la revendication 1, **caractérisé en ce que** les moyens de liaison sont adaptés de sorte que les éléments structurels d'un document publié électroniquement sont modifiés par les instructions opérationnelles dérivant des données de protection supplémentaires de façon à effectuer la conversion vers le document reconstruit.

3. Appareil selon la revendication 1 ou 2, **caractérisé en ce que** les moyens de stockage de données locaux sont constitués par une mémoire de masse optique et/ou magnétique (18), dans lesquels les données de volume du document publié électroniquement sont stockées dans une pluralité d'emplacements de stockage qui n'ont pas de relation entre eux, et dans lequel les données de protection supplémentaires indiquent une interconnection et/ou une séquence des emplacements de stockage.

4. Appareil selon la revendication 1 ou 2, **caractérisé en ce que** les moyens de stockage de données locales sont constitués par une mémoire de masse optique et/ou magnétique (18), dans lequel les données de volume du document publié électroniquement qui sont stockées à l'intérieur présente des espaces de données et ces espaces de données peuvent être directement fermés par les données de protection supplémentaires, ou dans lequel les données de protection supplémentaires incluent des identifications d'emplacement de stockage qui font référence à des emplacements de stockage séparés des moyens de stockage de données locales (18), des données correspondant aux espaces étant stockées d'une façon correspondant aux espaces de données.

5. Appareil selon la revendication 1 à 4, **caractérisé par** des moyens d'encodage qui sont mis en oeuvre au moyen d'un premier module (32) de la source de données externe et d'un deuxième module (24) du système d'ordinateur local et qui est adapté pour la transmission protégée des données de protection supplémentaires en provenance de la source de données externe (12) vers le système d'ordinateur local (14).

6. Appareil selon l'une des revendications 1 à 5, **caractérisé par** un module d'identification et/ou de facturation (36) qui est adapté pour identifier un utilisateur du système d'ordinateur local et pour acquérir des données correspondant à l'utilisation et/ou à la facturation.

7. Appareil selon l'une des revendications 1 à 6, **caractérisé par** un module de contrôle (28) qui est disposé dans le système d'ordinateur local (14) et qui est prévu pour un contrôle de dialogue et opérationnel de l'échange de données avec la source de données externe (12) et/ou une unité de traitement (22) qui est prévue pour détecter des commandes de l'utilisateur et pour influencer le fonctionnement du système d'ordinateur local en réaction aux commandes d'utilisateur.

8. Un procédé de représentation protégée de documents publiés électroniquement, comprenant les étapes suivantes :
- l'établissement dans chaque session, un contact authentifié en ligne, ou au moins temporairement en ligne, entre un système d'ordinateur local (14) et une source de données externe (12) par l'intermédiaire d'un réseau de transmission de données (10).
- la demande de données de document en provenance d'un moyen de stockage de données locaux (18) faisant partie du système d'ordinateur local (14) et qui stocke les données de document sous forme non reconstruite, en particulier non linéaire.
- la réception (s12) de données de protection supplémentaires provenant de la source de données externe (12) connectées au système d'ordinateur local (14) au moyen du réseau de transmission de données (10).
- la liaison (s14) des données de protection supplémentaire à un contenu des moyens de stockage de données locales (18) pour produire des données de document sous une forme utilisable, ayant un sens et/ou adéquat pour une perception sensorielle par l'utilisateur.
- la demande, exécution et/ou fourniture des données de document dans ladite forme utilisable, ayant le sens et/ou adéquate pour une perception sensorielle par l'utilisateur, au moyen de moyens de sortie (20) choisis en fonction du type de document devant être publié électroniquement, et
- l'évitement d'un stockage local des données de document produites.

9. Un procédé selon la revendication 8, dans lequel l'étape de liaison comprend les étapes suivantes :
- l'obtention des instructions fonctionnelles à partir desdites données de protection supplémentaires.
- la modification les éléments structurels d'un document publié électroniquement avec les instructions fonctionnelles, pour ainsi fournir un document reconstruit sous la forme utilisable, ayant un sens et/ou adéquat pour une perception sensorielle par l'utilisateur.

10. Un procédé selon la revendication 8 ou 9 **caractérisé en ce que** le stockage des données des documents locales est effectuée dans une séquence qui, sans liaison de données de protection supplémentaires ne permet pas la représentation de données de documents sous une forme utilisable, ayant un sens et/ou adéquate pour une perception sensorielle.

11. Un procédé selon l'une des revendications 8 ou 9 **caractérisé en ce que** le stockage des données des documents locales avec des espaces est réalisé de telle façon que ces espaces sont fermés seulement par liaison aux données supplémentaires.

12. Un procédé selon l'une des revendications 8 à 11 **caractérisé par** les étapes suivantes :
- l'identification de l'utilisateur dans la source de données externe (12), et
- l'échange des données d'utilisateur et/ou de facturation (s10) en fonction de l'utilisateur en réaction à l'identification avant la réception des données de protection supplémentaires.

13. Un procédé selon l'une des revendications 8 à 12 **caractérisé en ce que** l'étape de réception de données de protection supplémentaires inclut les étapes suivantes :
- l'encodage des données de protection supplémentaires par la source de données (12) par la transmission de
- la transmission des données de protection supplémentaires encodées au moyen du réseau de transmission (10), et
- le décodage des données de protection supplémentaires codées par le système d'ordinateur local (14).

14. Un procédé selon la revendication 13 **caractérisé par** l'étape suivante :
- l'acceptation d'un code (s11) entre la source de données externe (12) et le système d'ordinateur local (14) avant l'étape de codage.

15. Un procédé selon l'une des revendications 8 à 14 **caractérisé par** la demande et la représentation successive d'une pluralité de documents, dans lequel un jeu de données de protection supplémentaire est reçu pour chacune des unités de données.

16. Un procédé selon l'une quelconque des revendications 8 à 15 **caractérisé par** en ce que la réception des données de protection supplémentaires dépend de l'unique autorisation d'accès et/ou temporaire établi par un accord entre le système d'ordinateur local (14) et la source de données externe (12).

17. Un procédé selon l'une quelconque des revendications 8 à 16 **caractérisé en ce que** les données qui sont utilisables par l'utilisateur comprennent un texte, fourni dans un langage présentant une pluralité de mots, les mots étant disposés dans un agencement qui forme une signification pour l'utilisateur, et au moins un des mots est agencé par l'effet des données supplémentaires en une position dans le texte qui permet une identification claire et une association du texte à l'utilisateur.
